# EUROPÄISCHE PATENTSCHRIFT

(11) **EP 1 250 581 B1**
(45) Veröffentlichungstag und Bekanntmachung des Hinweises auf die Patenterteilung: **22.10.2003**
(21) Anmeldenummer: 01909457.2
(22) Anmeldetag: 12.01.2001
(51) Int. Cl.: G01M 15/00

(54) **VERFAHREN ZUR AUSSETZERERKENNUNG BEI EINEM MEHRZYLINDRIGEN VERBRENNUNGSMOTOR**
METHOD FOR DETECTING MISFIRES IN A MULTICYLINDER INTERNAL COMBUSTION ENGINE
PROCEDE DE RECONNAISSANCE DE RATES DANS UN MOTEUR A COMBUSTION INTERNE MULTICYLINDRE

(30) Priorität: 14.01.2000 DE 10001284
(43) Veröffentlichungstag der Anmeldung: 23.10.2002
(73) Patentinhaber: ROBERT BOSCH GMBH, 70442 Stuttgart (DE)
(72) Erfinder: BARHO, Hans, 78073 Bad Duerrheim (DE); GROSS, Helmut, 70806 Kornwestheim (DE); LEHNER, Michael, 75417 Muehlacker (DE); LOHMANN, Andrea, 70195 Stuttgart (DE); BULLA, Martin, 74081 Heilbronn (DE); SEYFANG, Robert, 71691 Freiberg (DE)
(86) Internationale Anmeldenummer: DE0100117
(87) Internationale Veröffentlichungsnummer: WO01057381

(56) Entgegenhaltungen:
- US-A- 5 035 220
- US-A- 5 832 404

## Beschreibung

Die Erfindung betrifft ein Verfahren zur Aussetzererkennung bei einem mehrzylindrigen Verbrennungsmotor mit den im Oberbegriff des Anspruches 1 genannten Merkmalen.

### Stand der Technik

Verfahren zur Verbrennungsaussetzererkennung mit den gattungsbildenden Merkmalen sind prinzipiell im Stand der Technik bekannt. Die Verfahren basieren im wesentlichen darauf, daß aus motorintern ermittelten Werten für die Laufunruhe einzelner Zylinder des Verbrennungsmotors durch einen Vergleich mit festgelegten Schwellwerten Verbrennungsaussetzer in dem Falle erkannt werden, in dem die ermittelten Laufunruhewerte den Schwellwert überschreiten.

Die für die Verbrennungsaussetzererkennung maßgeblichen Laufunruhewerte für einzelne Zylinder werden unter Nutzung der Erkenntnis gewonnen, daß eine nicht erfolgende oder unvollständige Verbrennung innerhalb eines Zylinders eines Verbrennungsmotors charakteristische Änderungen des Drehmomentverlaufes des Motors gegenüber dem Normalbetrieb mit sich bringt. Durch den Vergleich der Drehmomentverläufe bzw. dem Beitrag, den einzelne Zylinder zum Drehmoment leisten, kann somit zwischen Normalbetrieb des Verbrennungsmotors ohne Aussetzer und dem aussetzerbehafteten Betrieb unterschieden werden. Die Unterschiede im Drehmomentverlauf werden durch Ermittlung von Segmentzeiten bestimmt, wobei berücksichtigt wird, daß ein infolge eines Aussetzers auftretender niedrigerer Drehmomentbeitrag eine Verlängerung der Segmentzeiten der Kurbelwelle mit sich bringt, wobei einem Kurbelwellensegment jeweils die Kolbenbewegung einzelner Zylinder während der drehmoment-produzierenden Expansionsphase entspricht.Die Kurbelwellensegmentzeiten lassen sich über geeignete Sensoren beispielsweise an einem mit der Kurbel- oder Nockenwelle befestigten Geberrad abtasten, auf dem die Grenzen der Segmentbereiche markiert sind. Die Kurbelwellensegmentzeiten werden üblicherweise zündungssynchron ermittelt und in Motorsteuergeräten gespeichert und ausgewertet. Die Auswertung erfolgt hierbei durch Berechnung von Laufunruhewerten aus den ermittelten Kurbelwellensegmentzeiten, wobei die Laufunruhewerte durch einen Sollwertvergleich mit einem Schwellwert eine Aussetzerkennung ermöglichen, die darauf beruht, daß das Überschreiten des festgelegten Schwellwertes als Aussetzer in dem zugehörigen Zylinder gewertet wird.

Das beschriebene Verfahren zur Aussetzererkennung hat sich prinzipiell bei mehrzylindrigen Verbrennungsmotoren mit einem zentralen Motorsteuergerät bewährt (siehe z.B. US-A-5 035 220 oder US-A-5 832 404). Bei hochzylindrigen Motoren mit mehreren Steuergeräten ergibt sich die Problematik, daß die Auswertung von Laufunruhewerten aus aufeinanderfolgenden Segmentzeiten außerordentlich kompliziert ist, da jedes Steuergerät nur eine Anzahl von daran angeschlossenen Zylindern versorgt, wobei in jedem der Steuergeräte nur die Daten einer Teilmenge von Zündendstufen und Einspritzventilen verarbeitet wird. Aus der Aufteilung der Zylinder auf mehrere Steuergeräte folgt dementsprechend, daß die Laufunruhewerte aus aufeinanderfolgenden Segmentzeiten nur durch entsprechenden Speicher- und Berechnungsaufwand ermittelt und für eine Verbrennungsaussetzerkennung genutzt werden können.

Außerdem können Rechenzeitprobleme auftreten.

Zur Verdeutlichung wird der Fall eines Motors mit zwei Steuergeräten betrachtet,von denen jeweils eines die Zündung und Einspritzung für jeweils eine Zylindergruppe steuert und bei dem die Verbrennungsaussetzererkennung in einem Steuergerät zusammengefasst ist. Dieses Steuergerät wird im folgenden auch als Diagnosesteuergerät bezeichnet.

Die Erfindung zeichnet sich durch eine vorteilhafte Aufteilung der Rechenzeit des Diagnose-SG zwischen zwei Zündungen innerhalb der diesem Steuergerät zugeordneten Zylindergruppe aus.

Die Zeitspanne zwischen zwei solchen Zündungen reicht im Prinzip aus, um die Daten der ersten Zündung zu verarbeiten, einen weiteren Interrupt zu erzeugen, der einer Zündung des anderen Steuergerätes zugeordnet ist, eine zugehörige Segmentzeit zu erfassen und für die Verbrennungssausetzererkennung zu verarbeiten.

In den Interruptroutinen der Zylinder, deren Zündungen vom Diagnosesteuergerät gesteuert werden, erfolgt nicht nur eine Auswertung der zugehörigen Segmentzeiten zur Aussetzererkennung. Zusätzlich erfolgt innerhalb dieser Routinen auch die Berechnung weiterer Funktionen wie der Zündung und der Einspritzung.

Dagegen werden in den Routinen der Interrupts, die den Zündungen der anderen Zylinder, die vom zweiten Steuergerät berechnet werden, zugeordnet sind, nur Segmentzeiten erfaßt und für die Aussetzererkennung ausgewertet.

Deshalb sind die Interruptroutinen der vom Diagnosesteuergerät gesteuerten Zylinder im zeitlichen Verlauf wesentlich länger als die der Zylinder, die vom zweiten Steuergerät gesteuert werden.

Problematisch ist, dass die Verarbeitung der Daten der ersten Zündung so lange dauern kann, dass der weitere Interrupt - bei vollständiger Abarbeitung der Daten der ersten Zündung - nicht synchron mit dem Zündinterupt des 2. SG erfolgt.

Unterbricht man die Verarbeitung der Daten des ersten Interrupts und gibt man dem synchron erfolgenden weiteren Interrupt einschließlich der Berechnung seiner Daten den Vorrang, so kann es passieren, das die Berechnungsergebnisse des weiteren Interrupts zeitlich vor dem Berechnungsergebnis des ersten Interrupts vorliegen. Dann kann es zu unerwünschten Vertauschungen in der Berechnungsreihenfolge der Laufunruhe kommen.

Erfindungsgemäß wird die Abarbeitung der Daten der ersten Zündung für die Auslösung des weiteren Interrupts unterbrochen und nach der Auslösung des weiteren Interrupts wird die zugehörige Segmentzeit phasenrichtig zum Zündinterrupt des zweiten SG erfasst und gespeichert.

Danach wird zunächst die Abarbeitung der Daten der ersten Zündung zu Ende gebracht, bevor der Laufunruhewert mit der Segmentzeit des weiteren Interrupts berechnet wird.

So ist vorteilhafterweise sichergestellt, dass der Laufunruhewert der ersten Zündung im SG immer vor dem Laufunruhewert des direkt folgenden Zündinterrrupts des zweiten SG vorliegt. Dadurch wird vermieden, dass in der Berechnungsreihenfolge für die Laufunruhe Vertauschungen auftreten.

Ein weiterer bedeutender Vorteil liegt darin, dass durch die zusätzlichen Interrupts für die Zylinder, die nicht mit dem Diagnose-SG verbunden sind, der Algorithmus zur Aussetzererkennung und damit die Softwarerealisierung für Zwei-Steuergerätekonzepte Konzepte weitgehend der Softwarerealisierung für Ein-Steuergerätekonzepte entsprechen kann.

Begründung: Die Software zur Auswertung der Segmentzeiten läuft dann in beiden Interrupts, d.h. in den Interrupts der angeschlossenen und in den Interrupts der nicht angeschlossenen Zylinder. Wäre nur der Interrupt der angeschlossenen Zylinder vorhanden, dann müsste der Algorithmus zur Aussetzererkennung bzw. die SW-Realisierung für 2 SG Konzepte grundlegend geändert werden, weil dann in einer Interruptroutine Segmentzeiten für zwei Zündungen ausgewertet werden müsten.

Mit Hilfe der zusätzlichen Interrupts kann die Laufzeit der Interruptroutinen der angeschlossenen Zylinder verkürzt werden.

Die erfindungsgemäße Lösung zeigt im einzelnen ein Verfahren zur Aussetzererkennung bei einem mehrzylindrigen Verbrennungsmotor mit mindestens einem ersten Motorsteuergerät, das wenigstens die Einspritzung und Zündung für eine erste Teilmenge der Zylinder des Verbrennungsmotors steuert und mit wenigstens einem weiteren Motorsteuergerät (Diagnosesteuergerät), das die Einspritzung und Zündung für eine weitere Teilmenge der Zylinder steuert und in dem zusätzlich die Aussetzererkennung für die erste und weitere Teilmenge der Zylinder erfolgt,
wobei die Steuergeräte ein Motorsteuerungsprogramm verwenden, welches phasensynchron zur Drehbewegung der Kurbelwelle durch Interruptroutinen unterbrochen wird, in denen wenigstens die für Einspritzung und Zündung erforderlichen Daten verarbeitet werden,
und bei welchem Verfahren die Aussetzerkennung auf der Bildung und Auswertung von Kurbelwellensegmentzeiten basiert, in der die Kurbelwelle einen zugehörigen Kreissegmentwinkelbereich überstreicht, und
wobei die Bildung und Auswertung der Kurbelwellensegmentzeiten ebenfalls in bestimmten Interruptroutinen stattfindet,
wobei die Bildung und Auswertung der Kurbelwellensegmentzeiten für die weitere Teilmenge von Zylindern in den Interuptroutinen erfolgt, in denen ihre Zündung gesteuert wird
und wobei die Bildung und Auswertung der Kurbelwellensegmentzeiten für die ersten Zylinder in bestimmten zusätzlich erzeugten Interruptroutinen erfolgt.

Bei einem vorteilhaften Ausführungsbeispiel erfolgt dann, wenn die Kurbelwellensegmentzeit eines der ersten Zylinder phasensynchron zur Motordrehung erfasst werden muß und die Interruptroutine des in der Zündfolge vorhergehenden weiteren Zylinders noch nicht zu Ende ist, eine Unterbrechung der noch nicht abgelaufenen Interruptroutine des in der Zündfolge vorhergehenden weiteren Zylinders, eine Erfassung und Speicherung der Kurbelwellensegmentzeit des einen der ersten Zylinder, eine Abarbeitung der noch nicht abgelaufenen Interrruptroutine des in der Zündfolge vorangehenden weiteren Zylinders und erst dann eine Verarbeitung der Kurbelwellensegmentzeit des einen der ersten Zylinder für die Aussetzererkennung.

### Vorteile der Erfindung

Das erfindungsgemäße Verfahren zur Verbrennungsaussetzerkennung bei mehrzylindrigen Verbrennungsmotoren mit den im Anspruch 1 genannten Merkmalen bietet gegenüber dem vorbenannten Stand der Technik den Vorteil, daß auch bei Verwendung von mindestens zwei die für jeweils eine Teilmenge der Zylinder anfallenden Daten für Zündung und Einspritzung beim Betrieb des Verbrennungsmotors verarbeitenden Motorsteuergeräten eine zuverlässige Erkennung von Verbrennungsaussetzern sichergestellt werden kann, ohne daß eine komplizierte Datenermittelung und Datenauswertung in verschiedenen Steuergeräten notwendig ist. Dadurch, daß in einem der Motorsteuergeräte für alle Zylinder des Verbrennungsmotors die zur Aussetzerkennung notwendigen Kurbelwellensegmentzeiten erfasst, gespeichert und ausgewertet werden, ist kein Datentransfer zwischen einzelnen Motorsteuergeräten mehr notwendig. Die Erfassung, Speicherung und Auswertung der Kurbelwellensegmentzeiten erfolgt in dem maßgeblichen Steuergerät hierbei zum einem durch Generierung von Zündinterrupts der an das Steuergerät angeschlossenen Zylinder und andererseits durch Generierung von zeitlich zwischen diesen Zündinterrupts liegenden rechnerischen Interrupts für diejenigen Zylinder, welche einem oder mehreren anderen Motorsteuergeräten zugeordnet sind. Durch diese Maßnahme stehen für den Algorithmus der Verbrennungsaussetzererkennung durch Auswertung der Laufunruhe einzelner Zylinder die Segmentzeiten aufeinanderfolgender Zündungen in einem Steuergerät zur Verfügung und können auf diese Weise problemlos ausgewertet werden.

Der oder die rechnerisch ermittelten Interrupts erfolgen bei der Generierung in dem für die Verbrennungsaussetzerkennung genutzten Steuergerät zeitgleich mit den Zündinterrupts desjenigen Steuergerätes, welches für die Ansteuerung des aktuell zündenden Zylinders zuständig ist.

Besonders vorteilhafte Ausgestaltungen des erfindungsgemäßen Verfahrens ergeben sich in Zusammenschau mit der technischen Lehre des Anspruches 1 aus den Merkmalen der Unteransprüche.

Um bei der Unterbrechung des Zündinterrupts durch die rechnerisch zusätzlich erzeugten Interrupts die Berechnungsreihenfolge der Verbrennungsaussetzererkennung nicht zu vertauschen, hat es sich als zweckmäßig erwiesen, wenn die rechnerisch generierten Interrupts den eigentlichen Zündinterrupt nur zur Bildung und Speicherung der Segmentzeit unterbrechen. Die Abarbeitung der Daten des rechnerisch erzeugten Interrupts erfolgt erst nach der vollständigen Abarbeitung der Datenmenge des normalen Zündinterrupts. Das erfindungsgemäße Verfahren ermöglicht es somit, unabhängig von der Anzahl der für die Steuerung eines Verbrennungsmotors verwendeten Motorsteuergeräte in einem der Motorsteuergeräte die Berechnungsfolge für die Verbrennungsaussetzererkennung durchzuführen, so daß das erfindungsgemäße Verfahren somit universell einsetzbar ist.

### Zeichnung

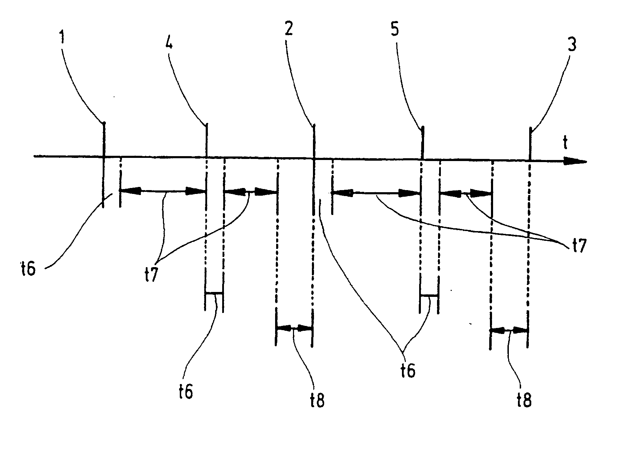

Im folgenden werden die Abläufe des erfindungsgemäßen Verfahrens, insbesondere in Bezug auf die Generierung von Zündinterrupts und rechnerisch erzeugten Interrupts sowie die Zeitabfolge der für die Verbrennungsaussetzererkennung notwendigen Segmentzeiten anhand eines schematischen Ablaufdiagramms erläutert. Die Abfolge ist in der beigefügten Zeichnung am Beispiel eines Zwei-Steuergeräte-Konzeptes dargestellt.

### Beschreibung des erfindungsgemäßen Verfahrens

In der beigefügten Zeichnung ist waagerecht eine mit "t" bezeichnete Zeitschiene aufgetragen. Oberhalb dieser Zeitschiene t sind durch die senkrechten Markierungen 1, 2 und 3 drei innerhalb eines Motorsteuergerätes erzeugte Zündinterrupts aufgezeichnet, wobei jeder der Zündinterrupts 1, 2 und 3 einem der durch das betreffende Steuergerät gesteuerten Zündimpuls eines diesem Steuergerät zugeordneten Zylinders entspricht. Zwischen den Zündinterrupts 1, 2 und 3 sind innerhalb der Zeichnung Markierungen 4 und 5 zu sehen, die den Zeitpunkt von rechnerischen Interrupts kennzeichnen, wobei die Zeitpunkte der rechnerischen Interrupts mit den gleichzeitig im anderen Steuergerät für die betreffenden dort angeschlossenen Zylinder generierten Zündinterrupts übereinstimmen. Sowohl nach den Zündinterrupts als auch nach den dazwischen generierten rechnerischen Interrupts ist aus der Figur eine Zeitspanne t6 ersichtlich, in der die für die zur Verbrennungsaussetzerkennung als Basiswert notwendige Kurbelwellensegmentzeit ermittelt und gespeichert wird. Betrachtet man die Zeitspanne zwischen dem Zündinterrupt 1 und dem Zündinterrupt 2, so wird aus der Figur ersichtlich, daß zunächst nach Ermittlung und Speicherung der Segmentzeit während der Zeitspanne t6 innerhalb einer anschließenden Zeitspanne t7 die Datenverarbeitung des zündsynchronen Interrupts erfolgt. Die Zeitspanne t7 wird während ihres Ablaufes einmal zur Erfassung und Speicherung der Segmentzeit des rechnerisch ermittelten Interrupts 4 unterbrochen.
Wie aus der Figur ersichtlich ist, ist die Zeitspanne zwischen zwei aufeinander folgenden Zündinterrupts 1 und 2 länger als die eigentliche Datenbearbeitungszeitspanne t7. Zwischen dem Ende der Bearbeitungszeit t7 und dem nächsten Zündinterrupt bleibt somit eine Zeitspanne t8, in der die Auswertung der zum rechnerischen Interrupt 4 gehörenden Segmentzeit erfolgen kann. Somit ist durch den rechnerisch ermittelten Interrupt zwar die Zeitspanne des Zündinterrupts unterbrochen, jedoch nur zur Bildung und Speicherung der Segmentzeit. Die Abarbeitung des rechnerisch ermittelten Interrupts erfolgt erst nach der vollständigen Abarbeitung des eigentlichen Zündinterrupts.

## Patentansprüche

1. Verfahren zur Aussetzererkennung bei einem mehrzylindrigen Verbrennungsmotor mit mindestens einem ersten Motorsteuergerät, das wenigstens die Einspritzung und Zündung für eine erste Teilmenge der Zylinder des Verbrennungsmotors steuert und mit wenigstens einem weiteren Motorsteuergerät, das die Einspritzung und Zündung für eine weitere Teilmenge der Zylinder steuert und in dem zusätzlich die Aussetzererkennung für die erste und weitere Teilmenge der Zylinder erfolgt,
wobei die Steuergeräte ein Motorsteuerungsprogramm verwenden, welches phasensynchron zur Drehbewegung der Kurbelwelle durch Interruptroutinen unterbrochen wird, in denen wenigstens die für Einspritzung und Zündung erforderlichen Daten verarbeitet werden,
und bei welchem Verfahren die Aussetzerkennung auf der Bildung und Auswertung von Kurbelwellensegmentzeiten basiert, in der die Kurbelwelle einen zugehörigen Kreissegmentwinkelbereich überstreicht, und
wobei die Bildung und Auswertung der Kurbelwellensegmentzeiten ebenfalls in bestimmten Interruptroutinen stattfindet,
wobei die Bildung und Auswertung der Kurbelwellensegmentzeiten für die weitere Teilmenge von Zylindern in den Interuptroutinen erfolgt, in denen ihre Zündung gesteuert wird
und wobei die Bildung und Auswertung der Kurbelwellensegmentzeiten für die ersten Zylinder in bestimmten zusätzlich erzeugten Interruptroutinen erfolgt.

2. Verfahren nach Anspruch 1, **dadurch gekennzeichnet, dass** dann, wenn die Kurbelwellensegmentzeit eines der ersten Zylinder phasensynchron zur Motordrehung erfasst werden muß und die Interruptroutine des in der Zündfolge vorhergehenden weiteren Zylinders noch nicht zu Ende ist, die noch nicht abgelaufene Interruptroutine des in der Zündfolge vorhergehenden weiteren Zylinders unterbrochen wird, die Kurbelwellensegmentzeit des einen der ersten Zylinder erfasst und gespeichert wird, die noch nicht abgelaufene Interrruptroutine des in der Zündfolge vorangehenden weiteren Zylinders zu Ende abgearbeitet wird und erst dann
die Kurbelwellensegmentzeit des einen der ersten Zylinder für die Aussetzererkennung verarbeitet wird.

## Claims

1. Method for detecting misfires in a multicylinder internal combustion engine having at least a first engine controller which controls at least the injection and ignition for a first subset of the cylinders of the internal combustion engine, and having at least one further engine controller which controls the injection and ignition for a further subset of the cylinders, and in which in addition the detection of misfires is carried out for the first and further subsets of the cylinders,
the controllers using an engine control programme which is interrupted phase-synchronously with respect to the rotational movement of the crank shaft by interrupt routines in which at least the data which is necessary for injection and ignition is processed,
and in which method the detection of misfires is based on the formation and evaluation of the crank shaft segment times, in which detection the crank shaft passes over an associated circular segment angular region, and the formation and evaluation of the crank shaft segment times also taking place in specific interrupt routines,
the formation and evaluation of the crank shaft segment times for the further subset of cylinders taking place in the interrupt routines in which their ignition is controlled,
and the formation and evaluation of the crank shaft segment times for the first cylinders taking place in specific, additionally generated interrupt routines.

2. Method according to Claim 1, **characterized in that** when the crank shaft segment time of one of the first cylinders has to be sensed phase-synchronously with respect to the rotation of the engine and the interrupt routine of the further cylinder which precedes in the ignition sequence is not yet over, the still uncompleted interrupt routine of the further cylinder which precedes in the ignition sequence is interrupted, the crank shaft segment time of one of the first cylinders is sensed and stored, the still uncompleted interrupt routine of the further cylinder which precedes in the ignition sequence is processed to its completion, and only then is the crank shaft segment time of one of the first cylinders processed for the detection of misfires.

## Revendications

1. Procédé de reconnaissance de ratés dans un moteur à combustion interne multicylindre, comprenant au moins une premier unité de commande du moteur, laquelle commande au moins l'injection et l'allumage pour un premier sous-ensemble de cylindres du moteur à combustion interne et comprenant au moins une autre unité de commande du moteur, laquelle commande l'injection et l'allumage d'un deuxième sous-ensemble de cylindres, et dans lequel se produit en outre une reconnaissance de ratés pour le premier et le deuxième sous-ensemble de cylindres, les unités de commande utilisant un programme de commande du moteur qui est interrompu de façon synchronisée avec le mouvement de rotation du vilebrequin par des sous-programmes d'interruption, dans lesquels sont traitées au moins les données nécessaires à l'injection et à l'allumage, procédé selon lequel la reconnaissance de ratés est basée sur la formation et l'exploitation de temps de segment de vilebrequin, au cours desquels le vilebrequin passe pardessus une zone angulaire en forme de segment de cercle correspondante, la formation et l'exploitation des temps de segment de vilebrequin étant également effectuées dans des sous-programmes d'interruption donnés, alors que la formation et l'exploitation des temps de segment de vilebrequin pour le deuxième sous-ensemble de cylindres sont effectuées dans les sous-programmes d'interruption, dans lesquels est commandé l'allumage, la formation et l'exploitation des temps de segment de vilebrequin pour les premiers cylindres étant effectuées dans des sous-programmes d'interruption supplémentaires donnés.

2. Procédé selon la revendication 1,
**caractérisé en ce que**
si le temps de segment de vilebrequin de l'un des premiers cylindres doit être enregistré de façon synchronisée avec la rotation du moteur et si le sous-programme d'interruption d'un autre cylindre précédent dans l'ordre d'allumage n'est pas encore terminé, alors le sous-programme d'interruption non encore exécuté de l'autre cylindre, précédent dans l'ordre d'allumage, est interrompu, le temps de segment de vilebrequin du cylindre faisant partie de l'un des premiers cylindres est enregistré et stocké, le sous-programme d'interruption non encore exécuté de l'autre cylindre, suivant dans l'ordre d'allumage, est traité jusqu'à la fin et alors seulement le temps de segment de vilebrequin du cylindre faisant partie de l'un des premiers cylindres est traité, afin de permettre la reconnaissance de ratés.
